Europäisches Patentamt

European Patent Office

Office européen des brevets

(19)

(11) **EP 0 561 430 B1**

(12) **EUROPÄISCHE PATENTSCHRIFT**

(45) Veröffentlichungstag und Bekanntmachung des
Hinweises auf die Patenterteilung:
**13.11.1996 Patentblatt 1996/46**

(51) Int. Cl.$^6$: **B60K 17/10**, B60K 17/356,
F16H 47/02, F16H 61/44

(21) Anmeldenummer: **93108941.1**

(22) Anmeldetag: **02.08.1990**

(54) **Hydrostatischer Antrieb für mehrachsig angetriebene Baueinheiten sowie Verfahren zum hydrostatischen Antreiben derartiger Baueinheiten**

Hydrostatic drive for components with multi-axle drive and process for driving said components hydrostatically

Transmission hydrostatique pour composants à plusieurs ponts moteurs ainsi que procédé pour l'entraînement hydrostatique desdits composants

(84) Benannte Vertragsstaaten:
**AT BE CH DE DK ES FR GB IT LI LU NL SE**

(30) Priorität: **03.08.1989 DE 3925703**

(43) Veröffentlichungstag der Anmeldung:
**22.09.1993 Patentblatt 1993/38**

(62) Anmeldenummer der früheren Anmeldung nach Art.
76 EPÜ: **90912981.9**

(73) Patentinhaber: **Kaspar, Ernst
D-89597 Munderkingen (DE)**

(72) Erfinder: **Kaspar, Ernst
D-89597 Munderkingen (DE)**

(74) Vertreter: **Grünecker, Kinkeldey,
Stockmair & Schwanhäusser
Anwaltssozietät
Maximilianstrasse 58
80538 München (DE)**

(56) Entgegenhaltungen:
EP-A- 0 347 804          DE-A- 1 680 157
DE-A- 3 409 566          DE-C- 3 331 651
GB-A- 2 119 905

## Beschreibung

Die Erfindung betrifft einen hydrostatischen Antrieb mit den Merkmalen des Oberbegriffs von Anspruch 1 sowie ein Verfahren mit den Merkmalen von Anspruch 4.

Weil die Arbeitsmaschinen von Fahrzeugen ein Antriebsaggregat benötigen und hierfür aus vielerlei Gründen Hydraulikmotoren bevorzugt sind, liegt es nahe, sowohl für den Fahrantrieb als auch für den Antrieb der Arbeitsgerätschaft dasselbe Antriebsaggregat zu verwenden und dementsprechend auch für den Fahrantrieb Hydraulikmotoren einzusetzen. Da diese Fahrzeuge in der Regel sehr schwer sind und sowohl zum Überwinden erheblicher Steigungen von z.B. bis zu 60% einerseits ausgelegt sein müssen und andererseits beim Überlandtransport eine ausreichende Fahrgeschwindigkeit von z.B. bis zu 62km/h erreicht werden müssen, sind an das Schaltgetriebe eines derartigen Fahrzeuges erhebliche Anforderungen gestellt, wobei die Tatsache, daß mehrer Achsen und bevorzugt sogar jedes Antriebsrad einzeln angetrieben werden muß, die Problematik noch vergrößern.

Bei Hydraulikantrieben, also Antrieben, die aus einer Hydraulikpumpe und einem damit über Leitungen verbundenen Hydraulikmotor bestehen, kann sowohl das Fördervolumen der Hydraulikpumpe als auch das Schluckvolumen des Hydromotors verstellt werden. Allerdings läßt sich zwischen maximaler und minimaler Drehzahl nur ein relativ geringes Drehzahlverhältnis, nämlich im Bereich von etwa 3: 1 bis 3,15 : 1 verwirklichen. Werden also sowohl verstellbare Hydropumpen als auch verstellbare Hydromotoren verwendet, so kann insgesamt ein Geschwindigkeits- bzw. Drehzahlbereich und entsprechend ein Drehmomentenbereich von etwa 9 : 1 bis 10 : 1 erreicht werden.

Über die genannten Geschwindigkeits- bzw. Drehzahlbereiche hinausgehende gewünschte bzw. geforderte Drehzahlen müssen durch mechanische Schaltgetriebe verwirklicht werden. Diese bedeuten aber einen zusätzlichen Aufwand. Bei einem Fahrzeug stellt das verhältnismäßig schwere Schaltgetriebe darüber hinaus ein zusätzliches Gewicht dar, daß die Zuladefähigkeit einschränkt. Außerdem lassen sich die Antriebsdrehzahlen bei konstanter Eingangsdrehzahl nur stufenweise verändern.

Es ist auch bereits vorgeschlagen worden, bei einem hydrostatischen Fahrzeugantrieb die Getriebeanordnung als hydraulisches Schaltgetriebe auszulegen. Ein solcher, gattungsgemäßer Antrieb ist aus der DE 34 09 566 A1 bekannt. Bei diesem bekannten Antrieb können z.B. zwei Hydraulikpumpen einzeln oder in Parallelschaltung betrieben werden. Diese beiden Hydraulikpumpen fördern in einen gemeinsamen Förderstrang, an den ein zuschaltbarer Hydraulikölspeicher angeschlossen ist. Über den Hydraulikstrang versorgen die Hydraulikpumpen und ggf. der Hydraulikölspeicher zwei parallel geschaltete Hydromotoren, von denen der eine oder der andere oder beide gemeinsam die Antriebsleistung des Fahrzeuges erbringen können. Die beiden Hydraulikpumpen und die beiden Hydromotoren können mittels Schaltkupplungen unabhängig voneinander zu- oder abgeschaltet werden. Der Zweck dieses bekannten Antriebs besteht darin, für Beschleunigungsphasen zusätzliche Antriebsleistung in Form von in dem Hydraulikölspeicher gespeichertem, auf Arbeitsdruck sich befindendem Hydrauliköl bereit zu stellen. Dies geschieht dadurch, daß in Verzögerungsphasen die Hydraulikpumpen weiterarbeiten und das Hydrauliköl anstatt in die Hydromotoren in den Hydraulikölspeicher fördern. Die Fähigkeit dieses bekannten Antriebes, mehrere hydraulisch arbeitende Schaltstufen zu realisieren, beruht also im wesentlichen auf dem Vorhandensein des Zwischenspeichers sowie auf dem Vorhandensein mehrerer, einzeln zuschaltbarer Hydraulikpumpen. Bei diesem bekannten Antrieb wird zur Beschleunigung des Fahrzeuges zunächst eine der beiden Hydromotoren angekuppelt und sodann von 0 bis zum maximalen Schluckvolumen ausgeschwenkt. Wird das Fahrpedal weiter betätigt, so erfolgt das Einrücken der Schaltkupplung des zweiten Hydromotors, wobei gleichzeitig das Schluckvolumen des ersten Hydromotors wieder auf 0 eingestellt wird, worauf dann bei anschließender Betätigung des Fahrpedals das Schluckvolumen erneut von 0 ausgehend bis auf den maximalen Wert erhöht wird, bis bei der maximal möglichen Stellung des Fahrpedals beide Hydromotoren mit maximalem Schluckvolumen arbeiten. Diese Betriebsweise erfordert also für Beschleunigungsvorgänge variable Hydraulikölmengen je Zeiteinheit, was entweder das Vorhandensein besonders leistungsfähiger und für den Normalbetrieb überdimensionierter Hydraulikpumpen oder die Verwendung eines gesondert zu- und abschaltbaren Hydraulikölspeichers erfordert. Noch schwerwiegender ist der Nachteil, daß mit diesem bekannten Antrieb, es ohne das Vorhandensein zusätzlicher Schaltgetriebe nicht möglich ist, den gesamten Leistungs- und Geschwindigkeitsbereich abzudecken, der von den hydraulisch angetriebenen Fahrzeugen im allgemeinen gefordert wird.

Davon ausgehend liegt der Erfindung die Aufgabe zugrunde, einen hydrostatischen Antrieb für eine Baueinheit mit den Gattungsmerkmalen des Anspruchs 1 zu schaffen, der als rein hydrostatische Antriebs- und Schaltanordnung in der Lege ist, bei vergleichsweise geringem Gewicht des Achsantriebes einerseits hohes Drehmoment und andererseits eine hohe Achsdrehzahl zu ermöglichen. Diese Aufgabe wird durch den hydrostatischen Antrieb mit den Merkmalen des Anspruchs 1 gelöst. Die Erfindung basiert also auf dem Grundgedanken, bei einem hydrostatischen Antrieb für Baueinheiten mit mindestens einer Hydraulikquelle und mindestens zwei parallel geschalteten Hydromotoren oder Gruppen von Hydromotoren, die durch eine mechanische Verbindung und insbesondere ein Übersetzungsgetriebe mit der jeweiligen anzutreibenen Achse verbunden sind und bei dem zumindest ein Teil der Hydromotoren von der Achse abkuppelbar ist, das Produkt aus der Drehmomentkonstante jedes Hydromotors und dem Übersetzungsverhältnis der zugehörenden mechanischen Verbindung für jede der angetriebenen Achsen anders zu wählen ist, wobei eine angetriebenen Achse auch aus Teilachsen, wie bei Tandemachsen einerseits und Halbachsen andereseits bestehen kann.

Durch die Erfindung wird unter anderem erreicht, daß auf ein mechanisches Schaltgetriebe verzichtet werden kann, daß gleichwohl hohe Drehmomente einerseits und relativ hohe Drehzahlen andererseits realisierbar sind und daß relativ kleine und damit preiswerte und leichte Hydromotoren verwendet werden können.

Als besonders wirkungsvoll und komfortabel hat es sich erwiesen, wenn zumindest bei einem Teil der Hydromotoren das Schluckvolumen, insbesondere bis auf Null, vorzugsweise stufenlos, während des Betriebes veränderbar ist. (Anspruch 2).

Wenn der Hydraulikstrom der mindestens einen Hydraulikquelle, vorzugsweise stufenlos, während des Betriebes veränderbar ist, wird vor allem das Anfahren der Baueinneit spürbar erleichtert.

Der größtmögliche Nutzen des erfindungsgemäßen Antriebes wird dann erreicht, wenn er derart betreibbar ist bzw. betrieben wird, daß bei hoher Lastanforderung und (zunächst) geringem Geschwindigkeitsbedarf zunächst alle Hydromotoren an die Last angekuppelt sind und, falls Ihr Schluckvolumen veränderbar ist, mit ihrem jeweils maximalen Schluckvolumen betrieben werden, wobei, falls der Hydraulikstrom der zumindestens einen Hydraulikquelle veränderbar ist, diese Veränderung im wesentlichen stufenlos erfolgt und daß bei zunehmendem Geschwindigkeitsbedarf und abnehmendem Lastbedarf zunächst das Schluckvolumen desjenigen Hydromotors, in dessen Zweig das Produkt k x i am größten ist, vorzugsweise stufenlos und insbesondere auf Null, gedrosselt wird und der dadurch verfügbar werdende Hydraulikstrom dem oder den Hydraulikmotor/en mit dem/den jeweils kleineren zugehörigen Produkt/en k x i zusätzlich zugeführt wird, wobei bei weiter zunehmendem Geschwindigkeitsbedarf mit den noch ungedrosselten Hydromotoren entsprechend verfahren wird (Anspruch 5). Bei dieser bevorzugten Auslegung des erfindungsgemäßen Antriebes erfolgt das Auskuppeln eines Hydromotors bevorzugt dann, nachdem sein Schluckvolumen auf Null heruntergedrosselt worden ist. In dieser Verfahrensweise ist er auch dann vorteilhaft einsetzbar, wenn der hydrostatische Antrieb zum Antrieb von Winden oder anderen Arbeitsmaschinen eingesetzt wird, wobei dann mehrere Hydromotoren nebst ihren zugehörigen Übersetzungsgetrieben ein einziges Teil, wie z.B. eine Windentrommel, gemeinsam antreiben. Eine "Baueinneit" kann im Sinne der vorliegenden Erfindung also die Trommel einer seilwinde, ein rotierbarer Mischbehälter, ein Fahrgestell mit Rädern od. dgl. sein. Bei einer Trommel od. dgl. sind die Hydromotoren - im Falle ihres Antriebs - über ein Getriebe - mittelbar oder unmittelbar - formschlüssig und bei einem Fahrgestell mit Rädern durch den Reibfluß zwischen Rad und Untergrund (Fahrbahn) kinematisch miteinander verbunden.

Die hydrostatischen Antriebe können - wie an sich bekannt - einen geschlossenen oder offenen Kreislauf aufweisen.

Der Deutlichkeit halber sei darauf hingewiesen, daß, im Sinne der Erfindung, diejenige, im allgemeinen als Getriebe ausgebildete, mechanische Verbindung die "größere" Übersetzung hat, die - bei gleichem eingangsseitigen Antriebsmoment - ein größeres Antriebsmoment abgibt. So wird z.B. die Übersetzung 1 : 36 als größer angesehen als die Übersetzung 1 : 15. Als Maß für die "Größe" einer Übersetzung wird also deren - auf eins bezogene - Nenner und nicht etwa der Quotient selber angesehen.

Ein erfindungsgemäßer hydrostatischer Antrieb arbeitet bevorzugt also folgendermaßen:

Bei der größten geforderten Vortriebskraft bzw. dem größten Antriebsmoment für die Baueinneit - Anfahren, Heben einer großen Last - werden alle Hydromotoren mit Druckmedium versorgt, wobei bei den verstellbaren Hydromotoren jeweils das größte Schluckvolumen eingestellt ist. Dementsprechend ergibt sich eine große Vortriebskraft bei geringer Gesamtgeschwindigkeit bzw. bei rotierenden Baueinheiten ein großes Antriebsmoment bei geringer Winkelgeschwindigkeit. Zur Erzeugung der größten erforderlichen Vortriebskraft bzw. des größten Drehmoments werden also alle hydraulischen Antriebsmotoren herangezogen, wobei der Hauptanteil von dem größten bzw. den größten Motoren erbracht wird, der bzw. die mit dem größten Übersetzungsverhältnis bzw. der größten Drehmomentenkonstante wirken. Die Drehzahlen der Hydromotoren ergeben sich jeweils aus der Gesamtgeschwindigkeit bzw. Winkelgeschwindigkeit und der jeweiligen Getriebeübersetzung. Entsprechend den Drehzahlen und dem maximalen Schluckvolumen der einzelnen Hydromotoren ergeben sich die hydraulischen Teilströme durch die einzelnen Hydromotoren. Wenn die erforderliche Vortriebskraft bzw. das Antriebsmoment für die Baueinheit sinkt, z.B. beim Nachlassen der Anfahrtbeschleunigung oder beim Nachlassen einer Steigung, kann der Hydromotor bzw. können die Hydromotoren, die in dem Zweig mit dem größten Produkt, gebildet aus der Drehmomentenkonstante und dem Übersetzungsverhältnis, arbeiten, durch zugehörige Kupplungen von der gesammten Baueinheit antriebsmäßig getrennt bzw. abgeschaltet werden, nachdem sein bzw. ihr Schluckvolumen auf Null verstellt worden ist und die Baueinheit somit insgesamt schneller bewegt bzw. gedreht wird. Hierdurch wird ein Überdrehen dieses bzw. dieser Hydromotoren verhindert.

Der bzw. die antriebsmäßig abgeschalteten Hydromotoren sind vorteilhafterweise durch Ventile von der Druckversorgung (Hydropumpe) auch hydraulisch trennbar, um einen besseren Wirkungsgrad zu erreichen. Der Förderstrom der Hydropumpe fließt nunmehr nur noch durch den Hydromotor bzw. die Hydromotoren des bzw. der Zweige mit einem entsprechend kleineren bzw. dem kleinsten Produkt (Drehmomentenkonstante x Über-setzungsverhältnis).

Die Bewegungs- bzw. Drehgeschwindigkeit kann dadurch weiter erhöht werden, daß auch der bzw. die Hydromotoren des bzw. der Zweige mit dem kleineren bzw. kleinsten Produkt (Drehmomentenkonstante x Übersetzungsverhältnis) als Verstellmotor ausgebildet sind und daß deren Schluckvolumen verringert wird.

Vorteilhafterweise kann die Hydraulikquelle zur Versorgung der Hydromotoren über eine Ventilanordnung auch mit anderen Verbrauchern, z.B. dem Hub- und dem Drehwerk eines Fahrzeugkranes, verbindbar sein.

Ausführungsbeispiele der Erfindung sind in der Zeichnung schematisch bzw. mit Symbolen dargestellt und werden im folgenden näher beschrieben. Es zeigen:

Fig. 1  eine Seiltrommel mit hydrostatischem Antrieb und

Fig. 2  einen hydrostatischen Antrieb mit unterschiedlich großen Hydromotoren und gleichen mechanischen Übersetzungsverhältnissen.

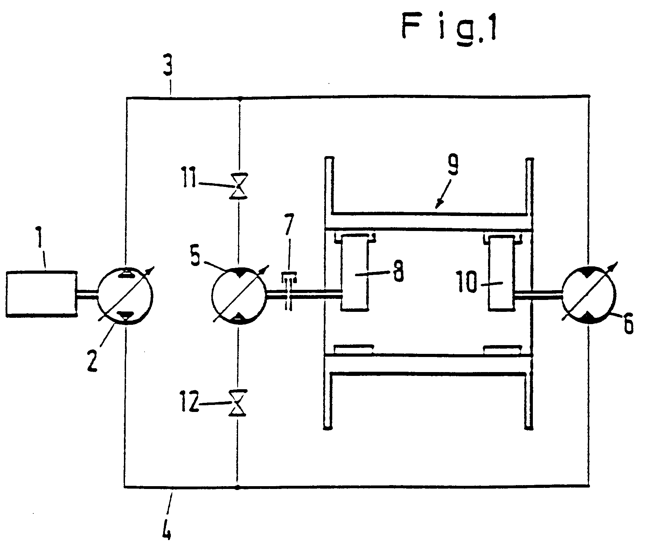

Bei dem Ausführungsbeispiel gem. Fig.1 treibt ein Dieselmotor 1 als Energiequelle eine Hydropumpe 2 mit stufenlos veränderlichem Verdrängungsvolumen und zwei Stromrichtungen an. Die Hydropumpe 2 ist durch zwei Leitungen 3, 4 eines geschlossenen Kreislaufs mit einem Hydromotor 5 mit veränderlichem Schluckvolumen und zwei Stromrichtungen und einem parallel geschalteten Hydromotor 6 mit konstantem Schluckvolumen und zwei Stromrichtungen verbunden. Der verstellbare Hydromotor 5 ist über eine Trennkupplung 7 und ein Getriebe 8, vorzugsweise ein Planetengetriebe, mit dem Übersetzungsverhältnis i8 mit einer Seiltrommel 9 verbunden. Der nichtverstellbare Hydromotor 6 ist über ein Getriebe 10, insbesondere wiederum ein Planetengetriebe, mit dem Übersetzungsverhältnis i10 mit der Seiltrommel 9 verbunden. Die Übersetzung i8 kann beispielsweise 1:35 und die Übersetzung i10 1:15 betragen. In jedem Fall ist die Getriebeübersetzung i8 des der Kupplung 7 benachbarten Getriebes 8 größer als die Übersetzung i10 des Getriebes 10. Übersetzung wird dabei proportional dem abgehbaren Drehmoment und damit dem Nenner der Getriebeübersetzung angesehen.

Zwischen dem verstellbaren Hydromotor 5 und den Leitungen 3, 4 ist jeweils ein Absperrventil 11,12 angeordnet.

Wird die Seiltrommel 9 bei maximalem Momentanbedarf angefahren, so ist bei dem Verstellmotor 5 das maximale Schluckvolumen (das ist das Volumen, das bei einer Umdrehung durch den Motor fließt) eingestellt. Die Verstellpumpe 2 ist in Null-Stellung, d.h. ihr Förder- oder Verdrängungsvolumen (das ist das Volumen, das bei einer Umdrehung abgegeben wird) ist auf Null eingestellt. Die Trennkupplung 7 ist geschlossen, d.h. ein etwa von dem Hydromotor 5 abgegebenes Drehmoment wird über das Getriebe 8 an die Seiltrommel 9 übertragen. Der Dieselmotor 1 treibt die Hydropumpe 2 mit konstanter Drehzahl an. Zum Anfahren wird die Verstellpumpe 2 stufenlos bis zu ihrem Maximum verstellt, d.h. ihr Fördervolumen Vp (in z.B.l bzw. l/U) und der sich daraus ergebende Hydraulik- oder Fördersstrom Q (in l/min) wird stufenlos von Null bis zum Maximum eingestellt. Der Förderstrom Q teilt sich in zwei Teilströme Q5 und Q6 durch die Hydromotoren 5 bzw. 6. Das Verhältnis der Drehzahlen der Hydromotoren 5 und 6 ist jeweils durch den Formschluß zwischen den Getrieben 8,10 und der Seiltrommel 9 und den Übersetzungsverhältnissen i8, i10 gegeben. So ist n6 = n5 i8/i10 .

Mit dem Abnehmen des erforderlichen Drehmoments an der Seiltrommel 9 wird das Schluckvolumen V5 des Verstellmotors 5 stufenlos reduziert. Wenn das Schluckvolumen V5 bei entsprechend geringem Drehmomentenbedarf an der Seiltrommel 9 auf Null reduziert ist, wird die Trennkupplung 7 gelöst und die hydraulische Verbindung des Motors 5 durch die Ventile 11, 12 gesperrt.

In Abwandlung des beschriebenen Ausführungsbeispiels kann auch der Hydromotor 5 mit veränderlichem Schluckvolumen ausgebildet sein. Durch Reduzierung des Schluckvolumens V6 des Motors kann die Drehzahl n9 der Seiltrommel 9 bei geringem Momentanbedarf, z.B. beim Heben eines leeren Kranhakens, weiter gesteigert werden.

An Stelle der beschriebenen verstellbaren Hydropumpe 2 kann eine Hydropumpe mit konstantem Verdrängungsvolumen mit einer entsprechenden Ventilsteuerung verwendet werden.

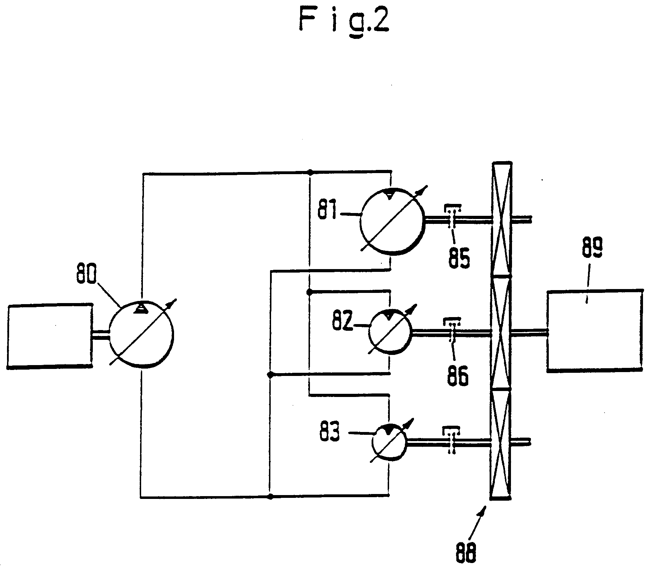

Bei dem Ausführungsbeispiel gemäß Fig. 2 sind an die von Null stufenlos verstellbare Hydropumpe 80 drei Hydromotoren 81,82,83 mit jeweils von Null stufenlos veränderlichem Schluckvolumen angeschlossen. Die drei parallel geschalteten Hydromotoren 81...83 haben jeweils eine andere Baugröße und damit ein anderes maximales Schluckvolumen und - diesem proportional - eine andere Drehmomentenkonstante k. Der Hydromotor 81 hat ein größeres maximales Schluckvolumen als der Hydromotor 82 und dieser wiederum als der Hydromotor 83. Die Drehmomentenkonstante entspricht dem abgegebenen Drehmoment an der Welle des Hydromotors bei maximalem Schluckvolumen und einer Druckdifferenz von 1 bar. Die Hydromotoren 81,82 sind über je eine Schaltkupplung 85,86 und ein Getriebe 88, der Hydromotor 83 unmittelbar über das Getriebe mit einer Baueinheit 89 verbunden. Die Zahnräder des Getriebes 88 haben alle gleiche Zähnezahlen, so daß sich für die mechanische Verbindung jedes Hydromotors das gleiche Übersetzungsverhältnis ergibt.

Bei Bedarf des größten Antriebsmoments an der Baueinheit 89 sind alle Hydromotoren 81...83 auf maximales Schluckvolumen ausgeschwenkt, wobei der größte Hydromotor 81 mit der größten Drehmomentenkonstante den größten Anteil an dem geforderten Gesamtmoment erbringt.

Bei einem kleinen geforderten Antriebsmoment sind die größeren Hydromotoren 81,82 auf Null geschwenkt und durch die Kupplungen 85,86 von dem Getriebe 88 bzw, der Baueinheit 89 getrennt.

Bei einem Momentanbedarf zwischen dem größten und dem kleinsten Momentanbedarf ist zumindest einer der größeren Hydromotoren 81,82 teilweise zurückgeschwenkt und/oder durch die zugehörige Kupplung getrennt.

## Patentansprüche

1. Hydrostatischer Antrieb für mehrachsig angetriebene Baueinheiten mit

   - mindestens einer Hydraulikquelle,
   - mindestens zwei parallel geschalteten Hydromotoren oder Gruppen von Hydromotoren sowie
   - einer mechanischen Verbindung mit einem Übersetzungshältnis (i) zwischen jedem Hydromotor und der/von dem jeweiligen Hydromotor angetriebenen Achse,

   bei dem

   - jeder der Hydromotoren bzw. jede der Gruppen von Hydromotoren jeweils eine oder mehrere Achsen antreibt/antreiben,
   - zumindest ein Teil der angetriebenen Achsen von dem/den sie antreibenden Hydromotor/Hydromotoren abkuppelbar ist und
   - die Drehmomentkonstanten (k) der die Baueinheit antreibenden Hydromotoren bei maximalem Schluckvolumen im wesentlichen gleich sind, wobei die Drehmomentkonstante (k) dem abgegebenen Drehmoment an der Welle des Hydromotors bei maximalem Schluckvolumen und einer Druckdifferenz von 1 bar entspricht,

   **dadurch gekennzeichnet,** daß die Übersetzungsverhältnisse der mechanischen Verbindungen unter Berücksichtigung der Durchmesser, für zumindest einen Teil der angetriebenen Achsen voneinander verschieden sind, so daß zumindest für diesen Teil der angetriebenen Achsen das jeweilige Produkt aus der Drehmomentkonstante jedes Hydromotors oder jeder Gruppe von Hydromotoren und dem Übersetzungsverhältnis der zugehörenden mechanischen Verbindung (k x i) ein anderes ist.

2. Hydrostatischer Antrieb nach Anspruch 1, **dadurch gekennzeichnet,** daß zumindest bei einem Teil der Hydromotoren das Schluckvolumen, insbesondere bis auf Null, vorzugsweise stufenlos, während des Betriebes veränderbar ist.

3. Hydrostatischer Antrieb nach Anspruch 1 oder 2, **dadurch gekennzeichnet,** daß der Hydraulikstrom der mindestens einen Hydraulikquelle (22,23;64), vorzugsweise stufenlos, während des Betriebes veränderbar ist.

4. Verfahren zum hydrostatischen Antreiben von mehrachsig anzutreibenden Baueinheiten nach einem der Ansprüche 1 bis 3, bei denen unter Verwendung mindestens einer Hydraulikquelle mindestens zwei Hydromotoren parallel geschaltet angetrieben und die Hydromotoren mit der/den Antriebsachse/n mechanisch verbunden sind und zumindest ein Teil der Hydromotoren von der/den Antriebsachse/n abkuppelbar ist, und bei dem, zumindest für einen Teil der Hydromotoren und der zugehörigen mechanischen Verbindungen mit einem Übersetzungsverhältnis (i) das jeweilige Produkt aus der Drehmomentkonstante jedes Hydromotors oder jeder Gruppe von Hydromotoren und dem Übersetzungsverhältnis der zugehörenden mechanischen verbindung (k x i) ein anderes ist, wobei die Drehmomentkonstante (k) dem abgegebenen Drehmoment an der Welle des Hydromotors bei maximalem Schluckvolumen und einer Druckdifferenz von 1 bar entspricht, **dadurch gekennzeichnet**, daß bei hoher Lastanforderung und geringem Drehzahlbedarf zunächst alle Hydromotoren an die Last angekuppelt sind und mit ihrem jeweils maximalen Schluckvolumen betrieben werden, wobei der Hydraulikstrom der mindestens einen Hydraulikquelle im wesentlichen stufenlos veränderbar ist, daß bei zunehmendem Drehzahlbedarf und abnehmendem Lastbedarf zunächst das Schluckvolumen desjenigen Hydromotors, im wesentlichen stufenlos und ggf. auf Null, gedrosselt wird, in dessen Zweig das Produkt k x i am größten ist und der dadurch verfügbar werdende Hydraulikstrom dem oder den Hydraulikmotor/en mit dem/den jeweils kleineren zugehörigen Produkt/en k x i zugeführt wird, und daß bei weiter zunehmendem Drehzahlbedarf mit den noch ungedrosselten Hydromotoren entsprechend verfahren wird.

## Claims

1. A hydrostatic drive for multiple-axle driven constructional units comprising

   - at least one hydraulic source,

   - at least two hydraulic motors or groups of hydraulic motors connected in parallel and

   - a mechanical connection with a transmission ratio (i) between each hydraulic motor and the axle driven by the respective hydraulic motor,

   wherein

- each hydraulic motor or group of hydraulic motors drives one or more axles, respectively,

- at least some of the driven axles can be uncoupled from the hydraulic motor or motors driving them, and

- the torque constants (k) for the hydraulic motors driving the constructional unit are substantially equal at the maximum absorption volume, the torque constant (k) corresponding to the torque delivered at the hydraulic motor shaft at the maximum absorption volume and a pressure difference of one bar,

characterised in that the transmission ratios of the mechanical connections, allowing for the diameters, for at least some of the driven axles are different from one another, so that at least for said some driven axles, the product of the torque constant of each hydraulic motor or group of hydraulic motors and the transmission ratio of the corresponding mechanical connection (k x i) is different.

2. A hydrostatic drive according to claim 1, characterised in that at least for some of the hydraulic motors the absorption volume can be varied more particularly down to zero, preferably steplessly, during operation.

3. A hydrostatic drive according to claim 1 or 2, characterised in that the hydraulic flow from the at least one hydraulic source (22, 23; 64) is variable preferably steplessly during operation.

4. A method of hydrostatically driving multiple-axle driven constructional units according to any of claims 1 to 3, wherein using at least one hydraulic source at least two hydraulic motors are connected and driven in parallel and the hydraulic motors are mechanically connected to the driving axle or axles and at least some of the hydraulic motors can be uncoupled from the driving axle or axles, and wherein, at least for some of the hydraulic motors and the associated mechanical connections with a transmission ratio (i), the respective product of the torque constant of each hydraulic motor or group of hydraulic motors and the transmission ratio of the associated mechanical connection (k x i) is different, the torque constant (k) corresponding to the torque delivered at the shaft of the hydraulic motor at the maximum absorption volume and a pressure difference of one bar, characterised in that for high load requirements and low speed requirements, initially all the hydraulic motors are coupled to the load and operated at their maximum absorption volume, the hydraulic flow of the at least one hydraulic source being substantially steplessly variable, whereas when the speed requirement increases and the load requirement decreases, initially the absorption volume of that hydraulic motor in whose branch the product (k x i) is greatest is throttled substantially steplessly and to zero if required, and the resulting available hydraulic flow is supplied to the hydraulic motor or motors with the smaller associated product (k x i), and when the speed requirement increases further, the same procedure is used with the as yet unthrottled hydraulic motors.

## Revendications

1. Transmission hydrostatique pour ensembles de construction entraînés à plusieurs essieux, comportant :

   - au moins une source hydraulique,
   - au moins deux moteurs hydrauliques ou groupes de moteurs hydrauliques, mis en circuit en parallèle, ainsi qu'
   - une liaison mécanique dotée d'un rapport de transmission (i), entre chaque moteur hydraulique et l'essieu/entre l'essieu et le moteur hydraulique respectif,

   dans lequel

   - chaque moteur hydraulique ou chaque groupe de moteurs hydrauliques entraîne/entraînent un ou plusieurs essieux
   - le couplage d'au moins une partie des essieux entraînés peut être désolidarisé du/des moteur(s) hydraulique(s) les entraînant, et
   - les constantes du moment de rotation (k) des moteurs hydrauliques entraînant l'ensemble de construction sont sensiblement égales cour la volume aspiré maximal, la constante du moment de rotation (k) correspondant au moment de rotation prélevé sur l'arbre du moteur hydraulique pour le volume aspiré maximal et une différence de pression de 1 bar,

   caractérisé en ce que les rapports de transmission des liaisons mécaniques, en prenant en considération les diamètres, sont différents les uns des autres pour au moins une partie des essieux entraînés, de manière que, au moins pour cette partie des essieux entraînés, le produit respectif calculé entre la constante du moment de rotation de chaque moteur hydraulique ou groupe de moteurs hydrauliques et le rapport de transmission de la liaison mécanique afférente (k x i) soit de valeur différente.

2. Transmission hydrostatique selon la revendication 1, caractérisée en ce qu'au moins pour une partie des moteurs hydrauliques, le volume aspiré est modifiable pendant le fonctionnement, de préférence de façon progressive continue, en particulier jusqu'à atteinte d'un début nul.

3. Transmission hydrostatique selon la revendication 1 ou 2, caractérisée en ce que le flux hydraulique de la au moins une source hydraulique (22, 23; 64) est modifiable pendant le fonctionnement, de préférence de façon progressive continue.

4. Procédé d'entraînement hydrostatique pour ensembles de construction entraînés à plusieurs essieux, selon l'une des revendications 1 à 3, pour lequel, en utilisant au moins une source hydraulique, au moins deux moteurs hydrauliques ou groupes de moteurs hydrauliques sont mis en circuit en parallèle, et les moteurs hydrauliques sont reliés mécaniquement au un ou plusieurs essieux d'entraînement, et au moins une partie des moteurs hydrauliques peut être désolidarisé du ou des essieux d'entraînement, et pour lequel, au moins pour une partie des moteurs hydrauliques et des liaisons mécaniques afférentes dotées d'un rapport de transmission (i), le produit respectif calculé de la constante du moment de rotation de chaque moteur hydraulique ou groupe de moteurs hydrauliques et du rapport de transmission de la liaison mécanique afférente (k x i) soit de valeur différente, la constante de couple (k) correspondant au couple prélevé sur l'arbre du moteur hydraulique, pour le volume aspiré maximal et une différence de pression de 1 bar, caractérisé en ce que, lorsque la charge demandée est élevée et que la vitesse de rotation demandée est faible, il y a d'abord couplage de tous les moteurs hydrauliques à la charge avec fonctionnement à leur volume aspiré respectif maximal, le flux hydraulique de la au moins une source hydraulique étant modifiable pratiquement de façon progressive continue, en ce que, lorsque la vitesse de rotation demandée augmente et que la charge demandée diminue, on opère d'abord un étranglement sur le volume aspiré, pratiquement de façon progressive continue et le cas échéant aboutissant au débit nul, pour le moteur hydraulique dans la branche duquel le produit k x i est maximal et le flux hydraulique dont on peut de ce fait disposer étant amené au un ou plusieurs moteurs hydrauliques ayant respectivement un produit afférent k x i inférieur, et en ce que, lorsque la demande de vitesse de rotation augmente encore, on procède de manière correspondante avec les moteurs hydrauliques n'ayant pas encore été soumis à un étranglement.

# Fig.1

# F i g.2